# EUROPÄISCHE PATENTANMELDUNG

(11) **EP 3 647 606 A1**
(43) Veröffentlichungstag der Anmeldung: **06.05.2020**
(21) Anmeldenummer: 19203786.9
(22) Anmeldetag: 17.10.2019
(51) Int. Cl.: F15B 11/06, F15B 20/00, B21J 15/18, F16K 31/122, F16K 35/02

(54) **SYSTEM MIT EINEM PNEUMATISCH BETRIEBENEN HYDRAULIKWERKZEUG, ABSCHALTVENTIL SOWIE WAGEN FÜR EIN PNEUMATISCH BETRIEBENES HYDRAULIKWERKZEUG**

(30) Priorität: 29.10.2018 DE 102018126940
(71) Anmelder: WS Wieländer + Schill Professionelle Karosserie- Spezialwerkzeuge GmbH & Co. KG, 78609 Tuningen (DE)
(72) Erfinder: Reitzig, Klaus, 58579 Schalksmühle (DE)
(74) Vertreter: Friderichs, Gunther

(57) **Zusammenfassung**

System mit einem pneumatisch betriebenen Hydraulikwerkzeug, insbesondere zum Ziehen und/oder Pressen, umfassend einen Anschluss für eine Pneumatikleitung, wobei zwischen dem Anschluss für die Pneumatikleitung ein Pufferspeicher für Pneumatikfluid angeschlossen ist, der das Hydraulikwerkzeug nach einem Druckabfall an dem Anschluss der Pneumatikleitung mit Druckluft zum Abschließen eines Arbeitsvorgangs versorgt, wobei das System ein Abschaltventil umfasst, welches nach Abschluss des Arbeitsvorgangs die Druckversorgung des pneumatisch betriebenen Hydraulikwerkzeugs stoppt.

## Beschreibung

### Gebiet der Erfindung

Die Erfindung betrifft ein System mit einem pneumatisch betriebenen Hydraulikwerkzeug. Das Hydraulikwerkzeug wird insbesondere zum Ziehen und/oder Pressen verwendet. Beispielsweise kann es sich bei dem Hydraulikwerkzeug um ein Niet-, Stanz- oder Auspresswerkzeug handeln. Die Erfindung betrifft des Weiteren ein Abschaltventil für ein pneumatisch betriebenes Hydraulikwerkzeug, welches im Falle eines Druckabfalls in der Pneumatikleitung die Druckluftversorgung für das pneumatisch betriebene Werkzeug unterbricht. Weiter betrifft die Erfindung einen Wagen für ein pneumatisch betriebenes Hydraulikwerkzeug, welcher Teil eines Systems ist, das einen Pufferspeicher für Pneumatikfluid umfasst.

### Hintergrund der Erfindung

Pneumatisch betriebene Hydraulikwerkzeuge sind bekannt. Diese werden mit bauseits zur Verfügung gestellter Druckluft, z.B. aus einem Kompressor, versorgt. Mittels der Druckluft wird ein Pneumatikkolben betätigt, der einen kleiner ausgebildeten Hydraulikkolben antreibt, um so hydraulische Drücke zu erzeugen, die größer als der anliegende Pneumatikdruck sind.

Derartige pneumatisch betriebene Hydraulikwerkzeuge werden insbesondere zum Setzen von Nieten, zum Stanzen sowie zum Auspressen, insbesondere im Karosseriebereich verwendet.

Das Dokument EP 2 565 469 A2 (Erfinder Klaus Reitzig) zeigt ein derartiges pneumatisch betriebenes Hydraulikwerkzeug, welches als Handgerät ausgebildet ist. Das in diesem Dokument beschriebene Werkzeug arbeitet nach dem Prinzip einer pneumatisch hydraulischen Pumpe. Während eines Arbeitsvorgangs, also beispielsweise dem Setzen eines Niets, wird der Pneumatikkolben, im Unterschied zu den meisten aus dem Stand der Technik bekannten Werkzeugen, nicht nur einmal in eine Richtung verschoben, sondern bewegt oszillierend einen Pneumatikkolben, der mit einem Hydraulikkolben gekoppelt ist, welcher über ein Saug- und Druckventil Hydraulikfluid zu einem weiteren Hydraulikkolben pumpt, der eine Zieh- oder Presseinrichtung betätigt.

So lassen sich hohe Kräfte bei gleichzeitig großem Hub zu erreichen.

Ähnlich arbeitende Werkzeuge sind auch mit einem stationären Druckerzeuger bekannt, bei welchen die pneumatisch hydraulische Pumpe in einer stationären Einheit angeordnet ist, welche das Hydraulikwerkzeug, genauer gesagt den Kolben, zum Ziehen oder Pressen des Hydraulikwerkzeugs mit Hydraulikfluid versorgt. Die stationäre Einheit ist dabei mittels einer Hydraulikleitung mit dem hydraulischen Handgerät gekoppelt.

Bei derartigen bekannten pneumatisch betriebenen Hydraulikwerkzeugen besteht das Problem, dass das Werkzeug bei einem Druckabfall in der Eingangsleitung, also z.B. wenn der Pneumatikschlauch abgeknickt wird, seine Funktion einstellt. Wird also beispielsweise beim Setzen eines Niets die Druckluftzufuhr unterbrochen, so wird der Arbeitsvorgang gestoppt, bevor der Niet fertig verarbeitet ist. Dies kann insbesondere bei Nieten dazu führen, dass die bereits teilweise gesetzte Nietverbindung unbrauchbar ist und sodann aufwendig entfernt werden muss.

Um dieses Problem zu vermeiden, bietet es sich an, das pneumatisch hydraulische Werkzeug oder dessen Druckluftzuführung mit einem Pufferspeicher zu versehen, welcher über ein Einwegventil mit dem Druckluftschlauch verbunden ist. Über das Puffervolumen kann eine hinreichende Menge an komprimiertem Pneumatikfluid bereitgestellt werden, um einen einmal angefangenen Arbeitsvorgang auch bei Ausfall der Druckluftversorgung zu beenden.

Das Werkzeug kann sodann noch weiter betrieben werden, so lange der im Pufferspeicher vorhandene Druck ausreichend ist, um den Pneumatikkolben zu betätigen.

Sofern der Anwender aber nicht merkt, dass die Druckluftzufuhr unterbrochen ist, besteht vorstehend genanntes Problem weiterhin. Das pneumatisch betriebene Werkzeug kann den ersten Arbeitsvorgang beenden. In der Regel steht dann aber immer noch hinreichend Druck im Pufferspeicher zur Verfügung, dass ein weiterer Arbeitsvorgang begonnen werden kann. Irgendwann sinkt der Druck im Pufferspeicher aber derart, dass das Werkzeug möglicherweise während eines laufenden Arbeitsvorgangs den Vorschub einstellt.

### Aufgabe der Erfindung

Der Erfindung liegt demgegenüber die Aufgabe zugrunde, die genannten Nachteile des Standes der Technik zumindest zu reduzieren.

Es ist insbesondere eine Aufgabe der Erfindung, ein sicheres und bedienerfreundliches Werkzeug bereitzustellen, welches pneumatisch betrieben ist und welches auch bei einem Ausfall der Druckluftzufuhr einen einmal begonnenen Arbeitsvorgang beenden kann, ohne dass die Gefahr besteht, dass das Werkzeug während des Arbeitsvorgangs seinen Vorschub einstellt.

### Zusammenfassung der Erfindung

Die Aufgabe der Erfindung wird bereits durch ein System mit einem pneumatisch betriebenen Hydraulikwerkzeug, durch ein Abschaltventil für ein System mit einem pneumatisch betriebenen Hydraulikwerkzeug sowie durch einen Wagen, welcher insbesondere ein System mit einem pneumatisch betriebenen Hydraulikwerkzeug umfasst, gelöst.

Bevorzugte Ausführungsformen und Weiterbildungen der Erfindung sind dem Gegenstand der abhängigen Ansprüche, der Beschreibung sowie den Zeichnungen zu entnehmen.

Gemäß einem ersten Aspekt der Erfindung betrifft die Erfindung ein System mit einem pneumatisch betriebenen Hydraulikwerkzeug.

Bei dem pneumatisch betriebenen Hydraulikwerkzeug handelt es sich insbesondere um ein Werkzeug mit einem hydraulisch betätigten Kolben zum Ziehen oder Pressen. Insbesondere handelt es sich um ein Niet-, Stanz- und/oder Auspresswerkzeug, welches insbesondere im Karosseriebereich Verwendung findet.

Bei dem erfindungsgemäßen pneumatisch-hydraulisch betriebenen Werkzeug kann es sich insbesondere um ein Werkzeug mit einer pneumatisch-hydraulisch betriebenen Pumpe handeln. Dieses umfasst einen oszillierend bewegten Pneumatikkolben, welcher oszillierend einen kleineren Hydraulikkolben bewegt, mittels dessen über ein Saug- und Druckventil Hydraulikfluid zu dem Kolben einer hydraulisch betriebenen Press- oder Zugvorrichtung gepumpt wird.

Über das Übersetzungsverhältnis von Pneumatikkolben zu Hydraulikkolben, also das Verhältnis der Kolbenflächen zueinander, kann der maximal mögliche Druck im Hydraulikbereich festgelegt werden. Vorzugsweise liegt das Verhältnis der wirksamen Kolbenfläche des Hydraulikkolben Pneumatikkolben zum zwischen 1:20 und 1:300, besonders bevorzugt zwischen 1:50 und 1:200. Das Übersetzungsverhältnis bestimmt den im Hydraulikbereich maximal erreichbaren Druck. Unter Vernachlässigung von Verlusten entspricht das Übersetzungsverhältnis mithin dem Verhältnis, in welchem aus dem anliegenden Pneumatikdruck ein hydraulischer Druck erzeugt werden kann.

Das erfindungsgemäße System kann dabei sowohl ein pneumatisch betriebenes Hydraulikwerkzeug umfassen, bei welchem sich der Pneumatikkolben, insbesondere die pneumatisch-hydraulische Pumpe im Handgerät des Werkzeugs befindet, als auch ein pneumatisch betriebenes Hydraulikwerkzeug umfassen, bei welchem sich der Pneumatikkolben, insbesondere die pneumatisch-hydraulische Pumpe, in einer stationären Einheit befindet, welche mittels einer Hydraulikleitung mit einem Handstück verbunden ist.

Gemäß der Erfindung ist zwischen dem Anschluss für die Pneumatikleitung ein Pufferspeicher für Pneumatikfluid angeschlossen, der das Hydraulikwerkzeug nach einem Druckabfall an dem Anschluss der Pneumatikleitung mit Druckluft zum Abschließen eines Arbeitsvorgangs versorgt.

Der Pufferspeicher ist also von seinem Volumen derart dimensioniert, dass dieser eine hinreichende Menge Druckluft zur Verfügung steht, dass zumindest ein Arbeitsvorgang des Hydraulikwerkzeugs auch bei vollem Hub zu Ende gebracht werden kann. Hierdurch wird verhindert, dass das Werkzeug im Falle eines Ausfalls der Druckversorgung während eines Arbeitsvorgangs, insbesondere während eines Nietvorgangs, seine Arbeit einstellt.

Gemäß der Erfindung umfasst das System weiterhin ein Abschaltventil, welches nach Abschluss des Arbeitsvorgangs die Druckversorgung des Hydraulikwerkzeugs stoppt.

Zusätzlich zum Pufferspeicher sieht die Erfindung also ein Ventil vor, das im Falle eines Druckabfalls, also insbesondere im Falle eines Ausfalls der bauseitigen Druckversorgung, die Druckversorgung des Hydraulikwerkzeugs stoppt, allerdings erst nach etwaigem Abschluss eines Arbeitsvorgangs.

Es versteht sich, dass das Abschaltventil sich dabei zwischen dem Pufferspeicher und dem Pneumatikkolben des pneumatisch-hydraulisch betätigten Werkzeugs befindet.

Bei einem Druckabfall bleibt das Abschaltventil, sofern der Benutzer bereits das Werkzeug betätigt hat, geöffnet, so dass der laufende Arbeitsvorgang abgeschlossen werden kann, während das pneumatisch-hydraulisch betriebene Werkzeug über den Pufferspeicher mit Druckluft versorgt wird.

Ist der Arbeitsvorgang dagegen beendet und wird das Werkzeug gestoppt, so wird durch das Abschaltventil die Druckluftzufuhr des pneumatisch betriebenen Hydraulikwerkzeugs unterbrochen. Dies hat den Vorteil, dass sodann kein weiterer Arbeitsvorgang mehr gestartet werden kann, und zwar auch dann, wenn der Pufferspeicher noch unter Druck steht.

Das Abschaltventil wird vorzugsweise zum einen über eine Entnahme von Pneumatikfluid durch das pneumatisch betriebene Hydraulikwerkzeug und zum anderen über eine Druckdifferenz gesteuert.

Wenn das pneumatisch betriebene Hydraulikwerkzeug Druckluft verbraucht, befindet sich das Abschaltventil in einem Zustand, in dem es nicht in eine Position zum Unterbrechen der Druckluftzufuhr geschaltet werden kann.

So kann auch bei einem Ausfall der Druckluftversorgung Druckluft aus dem Pufferspeicher nachfließen.

Wird dagegen keine Druckluft durch das pneumatisch betriebene Hydraulikwerkzeug entnommen, so befindet sich das Abschaltventil in einem Zustand, in welchem es bei einem auftretenden Abfall des anliegenden Pneumatikdrucks die Druckluftzufuhr unterbricht.

So wird sichergestellt, dass zwar ein laufender Arbeitsvorgang mittels des im Pufferspeicher vorhandenen Pneumatikfluids abgeschlossen werden kann, ein neuer Arbeitsvorgang dagegen im Falle eines Druckabfalls erst gar nicht eingeleitet werden kann.

Durch die Erfindung wird so auf einfache Weise eine sichere Bedienung ermöglicht. Es ist nicht notwendig, dass der Benutzer aktiv, etwa durch Inaugenscheinnahme eines Druckmanometers, einen Ausfall der Druckversorgung bemerkt.

Bei einer bevorzugten Ausführungsform der Erfindung umfasst das System einen Träger, welcher insbesondere als ein verfahrbarer Wagen ausgebildet ist. Der Träger umfasst den Anschluss für die Pneumatikleitung sowie einen Anschluss für das Hydraulikwerkzeug. Der Pufferspeicher ist Teil des Trägers.

Das Puffervolumen wird also durch einen verbringbaren Träger, insbesondere durch einen verfahrbaren Wagen, bereitgestellt.

Zum Anschließen des Hydraulikwerkzeugs kann der Träger einen Pneumatikanschluss umfassen. Bei dieser Ausführungsform der Erfindung ist das pneumatisch betriebene Hydraulikwerkzeug als mobiles Handgerät ausgebildet, welches mit einer Druckluftversorgung verbunden ist.

Gemäß einer anderen Ausführungsform der Erfindung kann sich dagegen der pneumatisch-hydraulische Druckübersetzer an dem Träger, also insbesondere in einer stationären Einheit, befinden. Bei dieser Ausführungsform ist ein hydraulisch betätigtes Handgerät mittels einer Hydraulikleitung mit dem pneumatisch-hydraulischen Druckübersetzer, der auf dem Träger angeordnet ist, verbunden.

Vorzugsweise ist das Abschaltventil am Träger angeordnet. Diese Ausführungsform der Erfindung ermöglicht die Bereitstellung eines Trägers mit Pufferspeicher und Abschaltventil, welcher zur Druckluftversorgung eines aus dem Stand der Technik bekannten pneumatisch betriebenen Hydraulikwerkzeugs verwendet wird.

Allein über den Träger wird eine zusätzliche Funktionalität dahingehend bereitgestellt, dass ein laufender Arbeitsvorgang beendet werden kann, das Werkzeug im Falle eines Druckabfalls aber nicht weiter betätigt werden kann, da die Druckluftzufuhr gesperrt ist.

Der Träger kann beispielsweise als verfahrbarer Wagen ausgebildet sein, auf welchem das Handgerät des Systems mit einer Betätigungseinrichtung sowie ggf. Zubehörteile und/oder Bedienelemente zur Reparaturstelle mitgeführt werden können. Weiter kann der Träger eine Einstelleinrichtung für den werkzeugseitig anliegenden Pneumatikdruck umfassen. Über eine Regelung des am Werkzeug anliegenden Drucks kann dessen Zug- oder Presskraft eingestellt werden.

Weiter kann der Träger ein Manometer für den Eingangsdruck und/oder den am Werkzeug anliegenden Druck umfassen.

Das Manometer für den am Werkzeug anliegenden Druck kann insbesondere derart ausgestaltet sein, dass auf einer Skala nicht der Druck, sondern die aus dem Druck resultierende Kraft angegeben ist. Es ist so auf einfache Weise möglich, die Druck- oder Zugkraft des Hydraulikwerkzeugs einzustellen.

Bei einer Weiterbildung der Erfindung umfasst das System ein Ablassventil, welches nach einem Druckabfall am Anschluss der Pneumatikleitung und Abschluss des Arbeitsvorgangs den Druck im Pufferspeicher entweichen lässt.

Im Falle eines Druckabfalls wird so nach dem Abschluss eines Arbeitsvorgangs das System zumindest teilweise drucklos gesetzt. Dies kann eine einfachere Überprüfung der Fehlerquelle ermöglichen.

Weiter kann das aus dem Ablassventil ausströmende Pneumatikfluid genutzt werden, um ein optisches und/oder akustisches Warnsignal zu generieren. Beispielsweise kann mittels der am Ablassventil ausströmenden Druckluft eine Pfeife betätigt werden oder ein Dynamo angetrieben werden, welcher eine elektrische Anzeigeeinrichtung, insbesondere eine LED, anschaltet.

Das Ablassventil ist also derart eingerichtet, dass dieses nach einem Druckabfall am Anschluss der Pneumatikleitung öffnet, allerdings erst dann, wenn ein etwaiger Arbeitsvorgang beendet ist. Um das Abschaltventil in einen Zustand zu versetzen, in welchem es nach Abschluss eines Arbeitsvorgangs die Druckluftversorgung stoppt, kann dieses, wie es bei einer bevorzugten Ausführungsform der Erfindung vorgesehen ist, mit einem Steuerluftspeicher verbunden sein, welcher bei Druckabfall von dem Anschluss der Pneumatikleitung getrennt wird. Über den Steuerluftspeicher wird sodann das Abschaltventil in einen Zustand geschaltet, bei welchem es nach Abschluss eines Arbeitsvorgangs die Druckversorgung des Hydraulikwerkzeugs stoppt.

Es ist insbesondere vorgesehen, dass der Steuerluftspeicher über ein Abtrennventil von der bauseitigen Pneumatikleitung getrennt wird, sobald es zu einem Druckabfall kommt. Dies kann beispielsweise über ein bistabiles Abtrennventil realisiert sein.

Der Steuerluftspeicher hat im regulären Betrieb denselben Druck wie der Pufferspeicher, also den Systemdruck, der auch am Pneumatikkolben des Druckübersetzers anliegt.

Kommt es zu einem Druckabfall am Anschluss des Systems, so kann das pneumatisch betriebene Hydraulikwerkzeug durch den im Pufferspeicher vorhandenen Druck weiter betrieben werden, wobei aber der Steuerluftspeicher durch das Abtrennventil vom Systemdruck getrennt wird.

Durch die Entnahme aus dem Pufferspeicher sinkt nunmehr aber der Systemdruck.

Aufgrund des Abtrennens des Steuerluftspeichers hat dieser dann höheren Druck als der Pufferspeicher und die zum pneumatisch betriebenen Hydraulikwerkzeug führende Pneumatikleitung. Die so vorhandene Druckdifferenz kann genutzt werden, um das Abschaltventil in einen Zustand zu versetzen, in dem es nach Beendigung eines Arbeitsvorgangs eine weitere Druckluftversorgung stoppt.

Der Steuerluftspeicher kann weiterhin mit einem Reset-Ventil verbunden sein, welches vom Benutzer betätigt werden kann, um den Steuerluftspeicher zu entlasten.

Das System ist so wieder in eine Ausgangsstellung zurückversetzt, in welcher bei wieder anliegender Druckluftversorgung Pufferspeicher und Steuerluftspeicher mit Pneumatikfluid gefüllt werden und in welchem das Abschaltventil in einen Zustand versetzt ist, in welchem es die Druckluftversorgung nicht nach Beendigung eines Arbeitsvorgangs stoppt.

Gemäß einem weiteren Aspekt betrifft Erfindung ein Abschaltventil, welches insbesondere für vorstehend beschriebenes System verwendet werden kann.

Das Abschaltventil umfasst einen Eingangsanschluss sowie einen Ausgangsanschluss. Weiter umfasst das Abschaltventil einen Verschluss, insbesondere Kolben, der bei Abruf von Pneumatikfluid an dem Ausgangsanschluss eine Fluidverbindung zwischen Eingangsanschluss und Ausgangsanschluss öffnet.

Der Kolben, bzw. das Hauptventil, ist insbesondere derart ausgebildet, dass dieser eine kleinere vordere Kolbenfläche als eine hintere Kolbenfläche umfasst. Die vordere Kolbenfläche ist dem Ausgangsanschluss zugeordnet.

Der Kolben ist vorzugsweise als Differentialkolbenmit einem Kanal ausgebildet.

Ähnlich des Venturi-Prinzips wird der Kolben beispielsweise gegen eine Druckfeder in eine geöffnete Stellung versetzt, sobald Fluid hindurchfließt. Wird dagegen keine Druckluft entnommen, kehrt der Kolben in seine geschlossene Ausgangsstellung zurück, da es am Ausgangsanschluss nicht mehr zu einem Druckabfall aufgrund des ausströmenden Fluids kommt.

Weiter umfasst das Abschaltventil einen Steuerluftanschluss, welcher bei einem Schwellwert einer Druckdifferenz zwischen Eingangsanschluss und Steuerluftanschluss den Kolben in einer geschlossenen Stellung sperrt, nicht aber in einer geöffneten Stellung.

Das Abschaltventil kann insbesondere einen beidseitig druckbeaufschlagten Steuerkolben umfassen.

Im Falle einer Druckdifferenz verfährt der Steuerkolben in eine Position, in welcher er den Verschluss, also insbesondere den Kolben des Abschaltventils sperrt, allerdings nur, wenn sich dieser im geschlossenen Zustand befindet.

Der Schwellwert der Druckdifferenz kann beispielsweise durch eine Feder bestimmt sein, gegen die der Steuerkolben läuft. In Abhängigkeit von der Federkraft ist festgelegt, ab welcher Druckdifferenz der Steuerkolben verfahren wird.

Das Sperren des Verschlusses, insbesondere des Kolbens, wird gemäß einer Ausführungsform der Erfindung dadurch realisiert, dass der Steuerkolben beim Überschreiten der Druckdifferenz Sperrelemente, welche insbesondere als Kugeln ausgebildet sind, in Eingriff mit dem Verschluss bringt.

Der als Kolben ausgebildete Verschluss kann hierzu zumindest eine Ausnehmung umfassen, in welche die Sperrelemente bei betätigtem Steuerkolben hineingedrückt werden, allerdings nur, wenn sich der Kolben in der geschlossenen Position befindet.

In der geöffneten Position werden die Sperrelemente dagegen beispielsweise an eine Seitenwand des Kolbens gedrückt, ohne in formschlüssigen Eingriff zu kommen.

Über den Steuerluftanschluss wird ein Referenzdruck geliefert. Dieser Referenzdruck kann insbesondere von vorstehend beschriebenem Steuerluftspeicher geliefert werden, welcher bei einem etwaigen Druckabfall vom Pneumatikanschluss abgetrennt wird und dadurch einen Referenzdruck zur Verfügung stellt.

Die Erfindung betrifft des Weiteren einen als Wagen ausgebildeten Träger, welcher insbesondere vorstehend beschriebenes System mit einem Abschaltventil umfasst.

Der Wagen umfasst einen Anschluss für eine Pneumatikleitung sowie einen Pufferspeicher für Pneumatikfluid zur Versorgung eines pneumatisch betriebenen Hydraulikwerkzeugs.

Der Wagen dient dem Transport des pneumatisch betriebenen Hydraulikwerkzeugs. Insbesondere umfasst der Wagen zumindest einen Pneumatik- oder Hydraulikanschluss für ein Handstück des pneumatisch betriebenen Hydraulikwerkzeugs.

Gemäß der Erfindung ist der Pufferspeicher als Rahmen des Wagens ausgebildet.

Die Erfindung sieht einem weiteren Aspekt also vor, nicht den Wagen mit einem separaten Druckbehälter zu versehen, sondern nutzt den Rahmen des Wagens, an welchem insbesondere Räder, Füße und/oder Griffe angeordnet sein können, als Pufferspeicher.

Für einen Werkstatteinsatz sollte der Wagen möglichst robust ausgebildet sein. Hierzu bietet sich die Verwendung von Metallrohren zur Ausbildung eines stabilen Rahmens an. Gemäß der Erfindung wird das durch die Metallrohre zur Verfügung gestellte Volumen gleichzeitig genutzt, um den Pufferspeicher auszubilden.

Es hat sich herausgestellt, dass so auf einfache und platzsparende Weise ein hinreichendes Volumen bereitgestellt werden kann, um das pneumatisch betriebene Hydraulikwerkzeug mit Druck zumindest für die Beendigung eines laufenden Arbeitsvorgangs zu versorgen.

Der Wagen kann gleichzeitig als Träger für ein Handgerät sowie zur Aufbewahrung von Zubehörteilen dienen.

Weiter kann der Wagen Betätigungseinrichtungen, insbesondere zur Einstellung des Drucks am Pneumatikkolben, umfassen.

Gemäß einer bevorzugten Ausführungsform der Erfindung ist der Rahmen als ein Winkel aus einem Rohr ausgebildet.

Der Wagen ist insbesondere L-förmig ausgebildet, wobei das Rohr umlaufend entlang zweier als L ausgebildeten Seitenteile läuft, die miteinander verbunden sind.

Zur Ausbildung des L können die Rohre entweder mittels Winkelteilen verschweißt oder aber auch gebogen sein.

Für einen bequemen Transport ist der Wagen vorzugsweise mit zumindest zwei Rädern versehen.

Gemäß einer anderen Ausführungsform der Erfindung kann der Wagen aber auch ohne Räder ausgestaltet sein, sondern lediglich Standfüße umfassen.

### Kurzbeschreibung der Zeichnungen

Der Gegenstand der Erfindung soll im Folgenden bezugnehmend auf die Zeichnungen Fig. 1 bis Fig. 7 näher erläutert werden.
Fig. 1 und Fig. 2 zeigen perspektivische Ansichten eines erfindungsgemäßen Systems mit einem pneumatisch betriebenen Hydraulikwerkzeug.
Fig. 3 zeigt das Schaltbild des erfindungsgemäßen Systems sowie das in dem System vorhandene Absperrventil.
Fig. 4 bis Fig. 7 sind Schnittansichten des Absperrventils in verschiedenen Betriebszuständen.

### Detaillierte Beschreibung der Zeichnungen

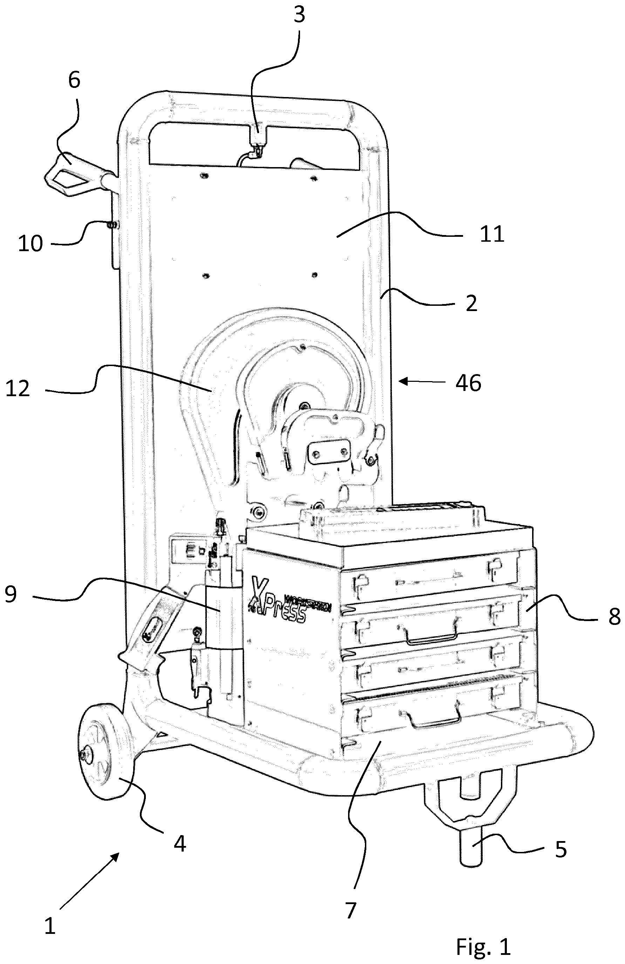

Fig. 1 ist eine perspektivische Ansicht eines erfindungsgemäßen Systems 1 mit einem pneumatisch betriebenen Hydraulikwerkzeug 9.

Das pneumatisch betriebene Hydraulikwerkzeug 9 ist in diesem Ausführungsbeispiel als mobiles Handgerät, also als Handstück, ausgebildet, bei welchem sich der Pneumatikkolben (nicht dargestellt) im Handgerät und nicht in einer stationären Arbeitsstation befindet.

Das System 1 umfasst einen Wagen 46 mit einem Rahmen 2.

Der Rahmen 2 ist L-förmig aus Rohren ausgebildet und bildet gleichzeitig einen Pufferspeicher 2.

Über den Anschluss 3 wird dieser Pufferspeicher 2 mit Druckluft befüllt bzw. über den Anschluss 3 wird im Falle eines Druckluftausfalls dem Pufferspeicher Druckluft entnommen.

Der Anschluss 3 befindet sich an der oberen Querstrebe des Rahmens 2, um das Risiko eines Austritts von Flüssigkeiten zu minimieren.

Das System 1 ist als Wagen 46 ausgebildet, der die Räder 4 sowie den vorderen Standfuß 5 umfasst.

Der so gebildete Wagen 46 kann an den Griffen 6 gefasst werden, so dass der Fuß 5 angehoben werden und der Wagen verfahren werden kann.

Der Wagen umfasst in diesem Ausführungsbeispiel einen Boden 7, auf welchem Zubehörteile, beispielsweise auch eine Werkzeugkiste 8, angebracht sind.

Weiter können Zubehörteile, wie beispielsweise Nietbügel 12, an der Rückwand 11 des Wagens aufgehängt werden.

Auch das pneumatisch betriebene Hydraulikwerkzeug 9, welches als Handgerät ausgebildet ist, kann mit dem Wagen 46 transportiert und an die Einsatzstelle gefahren werden.

Der Wagen umfasst des Weiteren den Anschluss 10 für die bauseitige Pneumatikleitung.

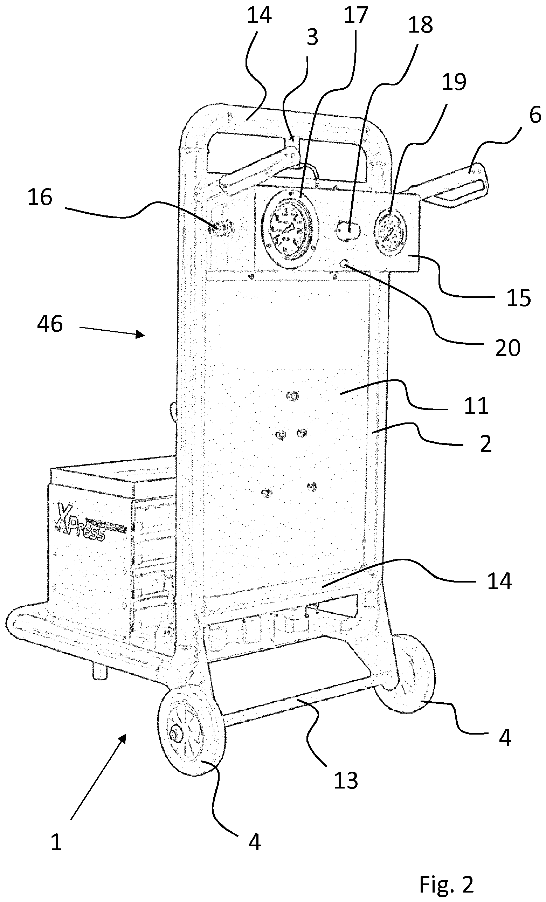

Wie in der perspektivischen Ansicht auf die Rückseite des Systems 1 gemäß Fig. 2 dargestellt, umfasst das System 1 des Weiteren in diesem Ausführungsbeispiel den Anschluss 16 für das pneumatisch betriebene Hydraulikwerkzeug. Es versteht sich, dass in diesem Ausführungsbeispiel der Anschluss 16 als Pneumatikanschluss ausgebildet ist. In einer anderen, nicht dargestellten Ausführungsform, bei welchem der pneumatisch-hydraulische Druckübersetzer Teil der stationären Einheit ist, wäre stattdessen ein Hydraulikanschluss vorgesehen.

In dieser Ansicht ist das pneumatisch betriebene Hydraulikwerkzeug (9 in Fig. 1) noch nicht mit dem Anschluss 16 verbunden.

Die Räder 4 sind am Rahmen 2, der gleichzeitig den Pufferspeicher 2 bildet, am Rahmen 2 angebracht und mittels der Achse 13 verbunden.

Weiter wird der Rahmen 2 aus zwei L-förmigen Seitenteilen gebildet, welche über Verbindungsrohre 14, die quer zu den Seitenteilen verlaufen, miteinander verbunden sind.

Das untere Verbindungsrohr 14 dient dabei in erster Linie einer verbesserten Stabilität. Durch das obere Verbindungsrohr 14 kann gleichzeitig einen Handgriff bereitgestellt werden.

In diesem Ausführungsbeispiel sind aber separate Griffe 6 vorhanden, welche an dem Rahmen 2 befestigt, insbesondere angeschweißt, sind.

An der Rückwand 11 des Wagens 46 ist ein Gehäuse 15 angeordnet, welches neben dem in Fig. 1 dargestellten Anschluss für die bauseitige Pneumatikleitung (10 in Fig. 1) auch den Anschluss 16 zum Anschluss des pneumatisch betriebenen Hydraulikwerkzeugs umfasst.

Weiter ist auch eine Pneumatikleitung vom Anschluss 3 des Pufferspeichers 2 zum Gehäuse 15 geführt.

Das Gehäuse 15 umfasst die Kraftanzeige 17. Die Kraftanzeige 17 ist letztendlich ein Druckmanometer, welches den am pneumatisch betriebenen Hydraulikwerkzeug anliegenden Druck anzeigt. Da dieser proportional zur vom Werkzeug ausgeübten Kraft ist, kann die Skalierung der Kraftanzeige 16 auch nicht als Druckskalierung, sondern als Kraftanzeige, beispielsweise mit einer Skalierung in kN, ausgestaltet sein.

Über den Kraftregler 18, welcher mit einem Druckregler verbunden ist, kann der Benutzer so auf einfache Weise die Maximalkraft des pneumatisch betriebenen Hydraulikwerkzeugs einstellen.

Weiter umfasst das System das Manometer 19, welches den Eingangsdruck anzeigt und welches in diesem Ausführungsbeispiel ebenfalls in diesem Gehäuse 15 angeordnet ist.

Über das Manometer 19 kann der Benutzer eine ausgefallene oder unzureichende Druckluftversorgung feststellen.

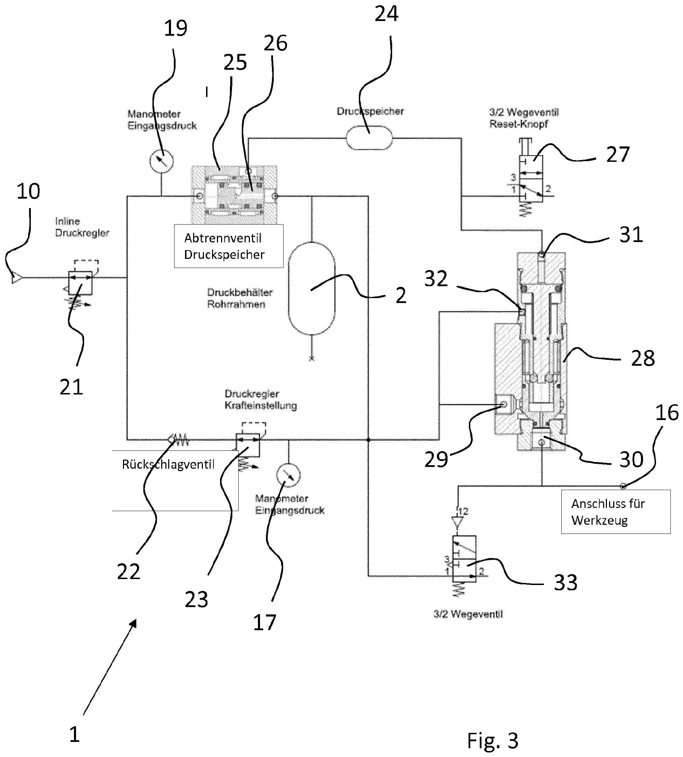

Weiter umfasst das System die Rücksetzeinrichtung 20. Über die Rücksetzeinrichtung 20 wird ein Ventil betätigt, welches den Druck aus einem Steuerluftspeicher ablässt und so das System nach einem Druckabfall in eine Ausgangsstellung zurücksetzt (siehe dazu Fig. 3) .

Fig. 3 ist das pneumatische Ersatzschaltbild des erfindungsgemäßen Systems. Die in dem Schaltbild dargestellten Komponenten befinden sich (mit Ausnahme des Pufferspeichers 2) vorzugsweise in dem in Fig. 2 dargestellten Gehäuse (15 in Fig. 2).

Über den Anschluss 10 für die Pneumatikleitung wird das System mit Druckluft versorgt. Das System ist vorzugsweise ausgebildet, um bei einem Eingangsluftdruck von unter 10 bar Hydraulikdrücke von über 500 bar zu erzeugen.

Strömungsseitig hinter dem Anschluss 10 für die bauseitige Pneumatikleitung kann ein Druckregler 21 vorhanden sein, welcher durch eine Druckreduzierung einen konstanten Systemdruck, beispielsweise zwischen 4 und 8 bar, bereitstellt.

Der Druckregler 21 ist dabei vorzugsweise fest eingestellt.

Hinter dem Druckregler 21 befindet sich das Manometer 19 zum Ablesen des Eingangsdrucks.

Weiter ist ein Rückschlagventil 22 vorhanden, welches zwischen dem Anschluss 10 und dem Pufferspeicher 2 sitzt. Über das Rückschlagventil 22 wird verhindert, dass bei einem Druckabfall Druckluft aus dem Pufferspeicher 2 in Richtung des Anschlusses 10 zurückfließt.

Hinter dem Rückschlagventil 22 ist der Druckregler 23 für die Krafteinstellung (welche über den Kraftregler 18 erfolgt, siehe Fig. 2) angeordnet. So kann der am Anschluss 16 für das pneumatisch betriebene Hydraulikwerkzeug vorhandene Druck und damit die Maximalkraft des Werkzeugs auf einfache Weise eingestellt werden.

Hinter dem Rückschlagventil 22 ist ferner ein Steuerluftspeicher 24 vorhanden, welcher vorzugsweise ebenfalls in dem in Fig. 2 dargestellten Gehäuse angeordnet ist.

Der Steuerluftspeicher 24 strömungsseitig ist hinter dem Pufferspeicher 2 angeordnet.

Zwischen Pufferspeicher 2 und Steuerluftspeicher 24 ist ein Abtrennventil 25 für den Steuerluftspeicher 24 angeordnet.

Das Abtrennventil 25 ist als Druckwaage ausgebildet und umfasst einen Kolben 26, der beidseitig mit Druckluft beaufschlagt ist. Auf einer Seite liegt der bauseitig vorhandene Luftdruck und auf der anderen Seite liegt der Systemdruck an.

Liegt der bauseitig vorhandene Druck, beispielsweise aufgrund eines Druckluftausfalls, unterhalb des Systemdrucks (beispielsweise um mehr als 0,2 bar), so verschiebt sich der Kolben 26 und verschließt das Abtrennventil 25 derart, dass der Steuerluftspeicher 24 vom Systemdruck, insbesondere von im Pufferspeicher 2 vorhandenem Druck, abgekoppelt ist.

Der ehemalige Systemdruck ist so quasi im Steuerluftspeicher 24 gespeichert und kann zur Ansteuerung des Abschaltventils 28 verwendet werden.

Über das Abschaltventil 28 strömt Druckluft zum Anschluss 16 für das pneumatisch betätigte Hydraulikwerkzeug.

Hierzu umfasst das Abschaltventil 28 einen Eingangsanschluss 29 und einen Ausgangsanschluss 30.

Das Abschaltventil 28 ist als Upstream-Ventil ausgebildet und öffnet im regulären Betrieb, sobald Druckluft am Anschluss 16 entnommen wird.

Weiter umfasst das Abschaltventil 28 den Steuerluftanschluss 31.

Über den Steuerluftanschluss 31 wird im Falle eines Differenzdrucks zwischen Systemdruck und Druck im Steuerluftspeicher 24 eine mechanische Verriegelung des Abschaltventils 28 in geschlossenem Zustand aktiviert, und zwar derart, dass nach Beendigung eines Arbeitsvorgangs keine weitere Luft zum Anschluss 16 strömen kann.

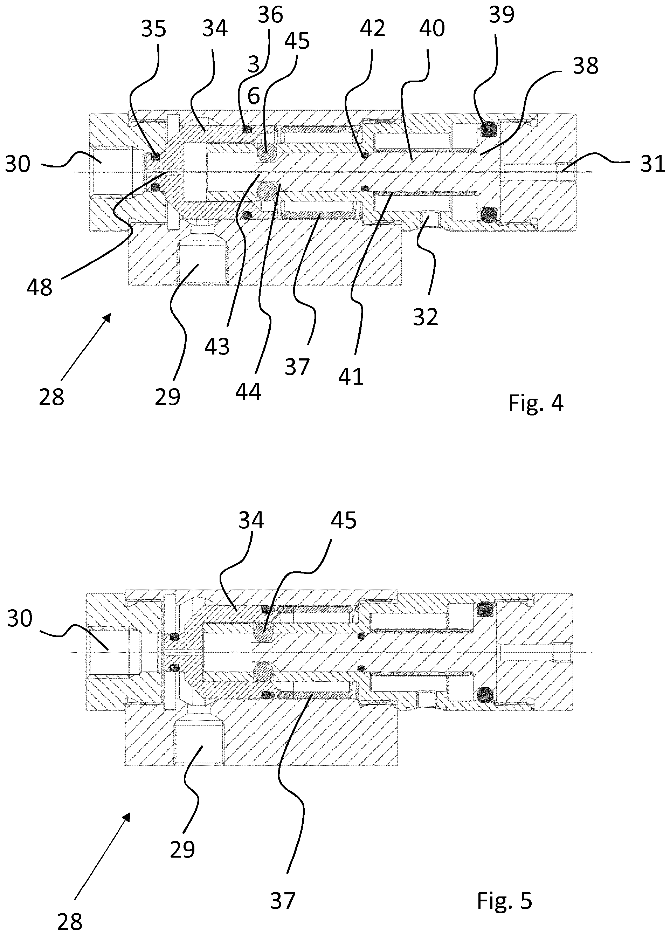

Ein hierfür verwendeter Steuerkolben (38 in Fig. 4-7) ist beidseitig mit Druckluft beaufschlagt. Hierfür umfasst das Abschaltventil 28 einen Systemdruckanschluss 32, welcher der Steuerung der Abschalteinrichtung dient.

Ist nun nach einem Druckabfall das Absperrventil 28 in geschlossenem Zustand verriegelt, so kann sich in der zum Anschluss 16 führenden Leitung kein Druck aufbauen, die Leitung zwischen Abschaltventil 28 und Anschluss 16 wird mit einer Betätigung des Werkzeugs sofort drucklos.

Über diese strömungsseitig hinter dem Abschaltventil 28 angeordnete Leitung kann wiederum das Ablassventil 33 geschaltet werden.

Das Ablassventil 33 ist mit dem Anschluss 16 verbunden und öffnet eine mit dem Pufferspeicher 2 verbundene Leitung. Der im Pufferspeicher 2 vorhandene Restdruck wird so abgelassen. Die ausströmende Luft kann zur Erzeugung eines akustischen Fehlersignals genutzt werden, in dem diese beispielsweise durch eine Pfeife geleitet wird.

Um das System 1 nach einer Behebung des Druckluftausfalls wieder zu aktivieren, muss der Benutzer das mit der Rücksetzeinrichtung (20 in Fig. 2) verbundene Ventil 27 betätigen, welches den Steuerluftspeicher entleert und so das System in seine Ausgangsstellung zurücksetzt.

Sofern sodann wieder Eingangsdruck anliegt, bewegt sich der Kolben 26 des Abtrennventils 25 wieder zurück in die hier dargestellte Ausgangsstellung, in welcher eine Fluidverbindung zwischen Steuerluftspeicher 24 und Pufferspeicher 2 vorhanden ist.

Die genaue Funktion des Abschaltventils 28 wird im Folgenden anhand der Schnittdarstellungen des Abschaltventils gemäß Fig. 4 bis Fig. 7 erläutert.

Fig. 4 ist eine Schnittansicht des Abschaltventils 28 in seiner Ausgangsstellung.

Das Abschaltventil 28 umfasst den Eingangsanschluss 29 sowie den Ausgangsanschluss 30. Über den Eingangsanschluss 29 strömt Pneumatikfluid durch das Absperrventil zum Ausgangsventil 30.

Fig. 4 zeigt die Stellung des Abschaltventils 28 in unbetätigtem Zustand.

Das Abschaltventil 28 umfasst den Kolben 34, welcher die Dichtungen 35 und 36 umfasst.

Die dem Eingangsanschluss 29 zugewandte Kolbenfläche, welche dem Gesamtdurchmesser des Kolbens 34 entspricht, ist größer als die dahinterliegende Kolbenfläche, welche dem mit der Dichtung 36 gegen das Gehäuse des Abschaltventils 28 gedichtet ist. Der Kolben 34, welcher Teil des Hauptventils ist, ist mithin als Differentialkolben ausgebildet und das Pneumatikfluid strömt seitlich durch den Eingangsanschluss 29 ein.

Weiter ist der Kolben 34 durch zumindest eine Feder 37 in Richtung des Ausgangsanschlusses 30 belastet.

Der Kolben 34 umfasst einen Kanal 48, der derart klein dimensioniert ist, dass ein Antrieb des Werkzeugs nicht durch die durch den Kanal strömende Luft möglich ist, da es hinter dem Kanal zu einem Druckabfall kommt, wenn das Werkzeug betätigt wird.

Wird durch das pneumatisch betriebene Hydraulikwerkzeug Druckluft entnommen, so kommt es vor dem Kanal 48 zu einem Druckabfall und der Kolben 34 wird ähnlich des Venturi-Prinzips aufgrund der unterschiedlichen Kolbenflächen gegen die Vorspannung der Feder 37 zurückgesetzt, so dass ein hinreichend großer Kanal zwischen Eingangsanschluss 29 und Ausgangsanschluss 30 bereitgestellt ist, um das Werkzeug anzutreiben.

Das Abschaltventil umfasst des Weiteren den Steuerkolben 38, welcher die Dichtung 39 umfasst.

Der Steuerkolben 38 ist von einer Seite mit dem Druck des Steuerluftanschlusses 31 (ausgehend vom Steuerluftspeicher) sowie auf der anderen Seite über den Systemdruckanschluss 32 mit Systemdruck beaufschlagt.

Aufgrund der Feder 41 verharrt der Steuerkolben 38 in der hier dargestellten Position, sofern nicht ein Schwellwert einer Druckdifferenz zwischen dem Steuerluftanschluss 31 und dem Systemdruck vorhanden ist. Der Schwellwert, ab dem der Steuerkolben 38 gegen die Vorspannung der Feder 41 bewegt wird, hängt von der Feder 41 ab.

Der Steuerkolben 38 umfasst des Weiteren die Kolbenstange 40, die mit der Dichtung 42 gegen das Gehäuse des Abschaltventils 28 abgedichtet ist.

Die Kolbenstange 40 ist zur Betätigung der vorzugsweise als Kugeln ausgebildeten Sperrelemente 45 eingerichtet.

Hierzu umfasst in diesem Ausführungsbeispiel die Kolbenstange 40 einen Dorn 43, welcher einen kleineren Durchmesser als der dahinter liegende Teil der Kolbenstange 40 aufweist und welcher über einen konischen Abschnitt 44 in die Kolbenstange 40 übergeht.

Die Sperrelemente 45 liegen in dem hier dargestellten Zustand an dem Dorn 43 an.

Hierdurch kann, wie in Fig. 5 dargestellt, der Kolben 34 an den Sperrelementen 45 vorbei nach hinten fahren und ein Fluidkanal zwischen Eingangsanschluss und Ausgangsanschluss öffnen, sobald das pneumatisch betriebene Hydraulikgerät betätigt wird.

Mit jeder Betätigung öffnet sich das das Upstream-Ventil ausgebildete Abschaltventil 28 und lässt so im regulären Betrieb Pneumatikfluid zum Druckübersetzer strömen,

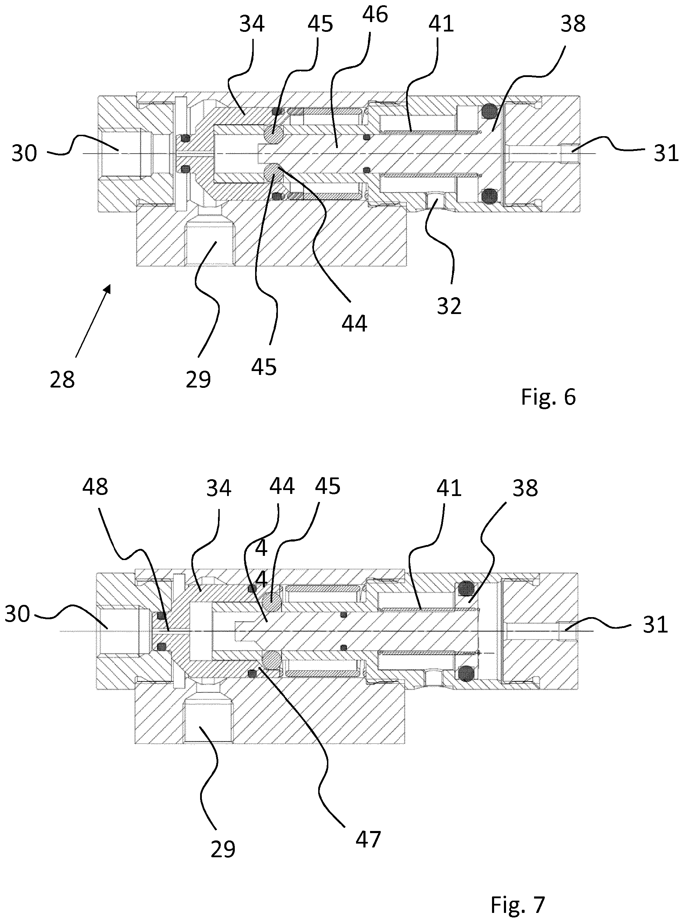

Fig. 6 zeigt den Zustand des Abschaltventils 28 im betätigten Zustand bei einem Ausfall der Druckluftversorgung.

Der Kolben 34 ist weiterhin geöffnet, da aufgrund des Pufferspeichers (2 in Fig. 3) weiterhin Luft zum Werkzeug strömt und dieses betreibt.

Aufgrund des nunmehr aber fallenden Systemdrucks wurde, wie im Zusammenhang mit Fig. 3 beschrieben, der Steuerluftspeicher vom Systemdruck abgetrennt, so dass der am Steuerluftanschluss 31 anliegende Druck höher ist als der Druck am Systemdruckanschluss 32.

Ab einem Schwellwert, welcher durch die Spannung der Feder 41 bestimmt wird, kann der Steuerkolben 38 mit der Kolbenstange 40 in Richtung der Sperrelemente 45 bewegt werden.

Da sich während eines Arbeitsvorgangs der Kolben 34 allerdings in der geöffneten Position befindet, liegen die Sperrelemente an einer inneren Wand des Kolbens 34 an und können nicht über den Steuerkolben 38 bzw. den konischen Abschnitt 44 nach außen in eine Verriegelungsposition bewegt werden.

Schließt sich aber, wie in Fig. 7 dargestellt, nach Abschluss eines Arbeitsvorgangs der Kolben 34, so wandert nunmehr aufgrund des höheren Drucks an dem Steuerluftanschluss 31 der Steuerkolben 38 gegen die Vorspannung der Feder 41 in eine Verriegelungsposition, in welcher die Sperrelemente 45 nach außen wandern und an einer Stufe 47 des Kolbens 34 anliegen.

Der Kolben 34 kann so nicht mehr zurücksetzen, da dieser durch die Sperrelemente 45 verriegelt ist.

Erst wenn der Benutzer die Rücksetzvorrichtung betätigt, wird Druckluft aus dem Steuerluftspeicher abgelassen und der Steuerkolben 38 kehrt in die in Fig. 4 dargestellte Ausgangsposition zurück.

In der in Fig. 7 dargestellten Stellung ist eine Weiterverwendung des Werkzeugs nicht möglich.

Vielmehr wird bei einer weiteren Betätigung des Werkzeugs die zwischen Werkzeug und Ausgangsanschluss 30 vorhandene Leitung sofort im Wesentlichen drucklos, da durch den lediglich noch durchströmbaren Kanal 48 des als Diffentialkolben ausgebildeten Kolbens 34 keine hinreichende Fluidmenge nachströmt, um die vorzugsweise als Schlauch ausgebildete Leitung zum Anschluss (16 in Fig. 2/3) des Werkzeugs unter Druck zu halten. Dies wird, wie in Zusammenhang mit Fig. 3 beschrieben, genutzt, um das Ablassventil 33 zu schalten, mittels dessen sodann der im Pufferspeicher vorhandene Restdruck abgelassen wird.

Das erfindungsgemäße System benötigt keinerlei elektrische Komponenten und ermöglicht dennoch auf einfache und wirksame Weise ein System, mit welchem ein pneumatisch betriebenes Hydraulikwerkzeug im Falle eines Ausfalls der Druckluftversorgung noch genau einen laufenden Arbeitsvorgang abschließt, sodann aber nicht weiter betätigt werden kann, bevor die Druckluftversorgung wieder hergestellt ist.

### Bezugszeichenliste

- 1: System
- 2: Rahmen/Pufferspeicher
- 3: Anschluss Pufferspeicher
- 4: Rad
- 5: Fuß
- 6: Griff
- 7: Boden
- 8: Werkzeugkiste
- 9: pneumatisch betätigtes Hydraulikwerkzeug
- 10: Anschluss für die Pneumatikleitung (bauseitig)
- 11: Rückwand
- 12: Nietbügel
- 13: Achse
- 14: Verbindungsrohr
- 15: Gehäuse
- 16: Anschluss für das pneumatisch betriebene Hydraulikwerkzeug
- 17: Kraftanzeige
- 18: Kraftregler
- 19: Manometer Eingangsdruck
- 20: Rücksetzeinrichtung
- 21: Druckregler
- 22: Rückschlagventil
- 23: Druckregler Kraftsteuerung
- 24: Steuerluftspeicher
- 25: Abtrennventil für den Steuerluftspeicher
- 26: Kolben des Abtrennventils
- 27: Reset-Ventil
- 28: Abschaltventil
- 29: Eingangsanschluss
- 30: Ausgangsanschluss
- 31: Steuerluftanschluss
- 32: Systemdruckanschluss
- 33: Ablassventil
- 34: Kolben (Differentialkolben)
- 35: Dichtung
- 36: Dichtung
- 37: Feder für den Kolben 34
- 38: Steuerkolben
- 39: Dichtung
- 40: Kolbenstange
- 41: Feder für den Steuerkolben 38
- 42: Dichtung
- 43: Dorn
- 44: konischer Abschnitt
- 45: Sperrelement
- 46: Wagen
- 47: Stufe
- 48: Kanal

## Patentansprüche

1. System mit einem pneumatisch betriebenen Hydraulikwerkzeug, insbesondere zum Ziehen und/oder Pressen, umfassend einen Anschluss für eine Pneumatikleitung, wobei zwischen dem Anschluss für die Pneumatikleitung ein Pufferspeicher für Pneumatikfluid vorhanden ist, der das pneumatische betriebene Hydraulikwerkzeug nach einem Druckabfall an dem Anschluss der Pneumatikleitung mit Druckluft zum Abschließen eines Arbeitsvorgangs versorgt, wobei das System ein Abschaltventil umfasst, welches nach Abschluss des Arbeitsvorgangs die Druckversorgung des pneumatisch betriebenen Hydraulikwerkzeugs stoppt.

2. System nach dem vorstehenden Anspruch, **dadurch gekennzeichnet, dass** das System einen Träger, insbesondere ausgebildet als ein verfahrbarer Wagen, mit dem Anschluss für die Pneumatikleitung sowie einem Anschluss für das Hydraulikwerkzeug umfasst, wobei zumindest der Pufferspeicher Teil des Trägers ist.

3. System nach dem vorstehenden Anspruch, **dadurch gekennzeichnet, dass** das Abschaltventil an dem Träger angeordnet ist.

4. System nach einem der vorstehenden Ansprüche, **dadurch gekennzeichnet, dass** das System ein Ablassventil umfasst, welchen nach einem Druckabfall am Anschluss der Pneumatikleitung und Abschluss des Arbeitsvorgangs den Druck im Pufferspeicher entweichen lässt.

5. System nach einem der vorstehenden Ansprüche, **dadurch gekennzeichnet, dass** das Abschaltventil mit einem Steuerluftspeicher verbunden ist, welcher bei Druckabfall von dem Anschluss der Pneumatikleitung getrennt wird, wobei über den Steuerluftspeicher das Abschaltventil in einen Zustand geschaltet wird, bei welchem es nach Abschluss eines Arbeitsvorgangs die Druckversorgung des Hydraulikwerkzeugs stoppt.

6. Abschaltventil, insbesondere für ein System nach einem der vorstehenden Ansprüche, wobei das Abschaltventil einen Eingangsanschluss und einen Ausgangsanschluss umfasst, wobei das Abschaltventil einen Verschluss, insbesondere einen Kolben, umfasst, der beim Abruf von Pneumatikfluid an dem Ausgangsanschluss eine Fluidverbindung zwischen Eingangsanschluss und Ausgangsanschluss öffnet, wobei das Abschaltventil einen Steuerluftanschluss umfasst, der bei einem Schwellwert einer Druckdifferenz zwischen Eingangsanschluss und Steuerluftanschluss den Verschluss in einer geschlossenen Stellung sperrt, nicht aber in einer geöffneten Stellung.

7. Abschaltventil nach dem vorstehenden Anspruch, **dadurch gekennzeichnet, dass** der Schwellwert der Druckdifferenz durch eine Feder bestimmt wird, gegen die ein Steuerkolben bei einer Druckdifferenz läuft.

8. Abschaltventil nach einem der vorstehenden Ansprüche, **dadurch gekennzeichnet, dass** das Abschaltventil einen Steuerkolben umfasst, welcher bei Überschreiten der Druckdifferenz ein oder mehrere Sperrelemente, insbesondere ausgebildet als Kugeln, in Eingriff mit dem Verschluss bringt.

9. Wagen, insbesondere umfassend ein System und/oder ein Abschaltventil nach einem der vorstehenden Ansprüche, umfassend einen Anschluss für eine Pneumatikleitung sowie einen Pufferspeicher für Pneumatikfluid zur Versorgung eines pneumatisch betriebenen Hydraulikwerkzeugs, wobei der Pufferspeicher als Rahmen des Wagens ausgebildet ist.

10. Wagen nach dem vorstehenden Anspruch, **dadurch gekennzeichnet, dass** der Rahmen als ein Winkel aus einem Rohr ausgebildet ist.
